# EUROPÄISCHE PATENTANMELDUNG

(11) **EP 4 654 106 A1**
(43) Veröffentlichungstag der Anmeldung: **26.11.2025**
(21) Anmeldenummer: 24177037.9
(22) Anmeldetag: 21.05.2024
(51) Int. Cl.: G06Q 10/20, G10L 15/183

(54) **VERFAHREN ZUM DOKUMENTIEREN ZUMINDEST EINER EIGENSCHAFT ZUMINDEST EINES GERÄTS MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Gröschel, Alexander, 91074 Herzogenaurach (DE); Pradhan, Pranita Rajan, 90766 Fürth (DE)
(74) Vertreter: Siemens Patent Attorneys

(57) **Zusammenfassung**

Die Erfindung betrifft ein Verfahren zum Dokumentieren zumindest einer Eigenschaft (12, 14) zumindest eines Geräts (16, 18) mittels einer elektronischen Recheneinrichtung (10), mit den Schritten: Empfangen von zumindest einem textbasierten Eigenschaftseintrag (20, 22) des Geräts (16, 18) mittels der elektronischen Recheneinrichtung (10); Anpassen des textbasierten Eigenschaftseintrags (20, 22) in ein standardisiertes Format (24) mittels einer künstlichen Intelligenz (26) der elektronischen Recheneinrichtung (10); und Speichern und Dokumentieren des textbasierten Eigenschaftseintrags (20, 22) im standardisierten Format (24) mittels der elektronischen Recheneinrichtung (10). Ferner betrifft das Computerprogrammprodukt, ein computerlesbares Speichermedium sowie eine elektronische Recheneinrichtung (10).

## Beschreibung

Die Erfindung betrifft ein Verfahren zum Dokumentieren zumindest einer Eigenschaft zumindest eines Geräts mittels einer elektronische Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Aus dem Stand der Technik ist bereits bekannt, dass von entsprechenden Geräten unterschiedliche, beispielsweise Ereignisse, dokumentiert werden können. Hierbei ist beispielsweise bei unterschiedlichen Herstellern eine unterschiedliche Dokumentation vorgesehen. Mit anderen Worten kann für das eine Gerät des einen Herstellers bei dem gleichen Ereignis eine wesentlich unterschiedliche Dokumentation stattfinden, als bei einem Gerät eines anderen Herstellers bei dem gleichen Ereignis. Ferner ist bekannt, dass entsprechende Eigenschaften/Ereignisse auch manuell dokumentiert werden können, sollte ein Ereignis eintreten. Hierbei werden jedoch von den unterschiedlichen Nutzern oftmals unterschiedliche Dokumentationsarten beziehungsweise Nachrichten verwendet, um das gleiche Ereignis zu dokumentieren.

Insbesondere um nun zukünftig Eigenschaften/Ereignisse entsprechend dokumentieren zu können, ist jedoch eine im Wesentlichen standardisierte Dokumentation von im Wesentlichen gleichen Eigenschaften unabdingbar, um beispielsweise entsprechende Modelle anzulernen, welche die Eigenschaften detektieren sollen.

Mit anderen Worten werden dem Stand der Technik derzeit Ausfall- und Wartungsereignisse mit unterschiedlichen Werkzeugen dokumentiert. Die Dokumentation folgt nicht unbedingt einheitlichen formalen, strukturellen, syntaktischen Richtlinien, insbesondere oftmals keine vordefinierten Bezeichnungen, Kategorien und oftmals erfolgt die Dokumentation in freier Textform. Darüber hinaus kann die Sprache der Dokumentation zwischen verschiedenen Standorten, Anlagen und Werkzeugen variieren.

Dies kann die Nutzung solcher Dokumentationsinformationen für die Entwicklung von beispielsweise Modellanwendungen möglich machen. Wenn beispielsweise Trainingsdaten für Modelle von Flotten vergleichbarer Anlagen erworben werden sollen, die unterschiedliche Dokumentationstools oder nicht standardisierte Dokumentationen verwenden, können die erworbenen Daten nicht ohne großen manuellen Aufwand für die Datenbereinigung und- Harmonisierung für das Modelltraining verwendet werden.

Des Weiteren sind automatische Protokollierungssysteme von Anlagen verschiedener Hersteller oder Komponentengenerationen bekannt, und können unterschiedliche Protokollmeldungen verwenden, die ähnliche Eigenschaften/Ereignisse/Probleme beschreiben. Ein entsprechendes Modell, das solche Log-Meldungen entweder als Eingabevariable oder als Label durch die Information verwendet, ist in einem solchen Fall in seiner Anwendbarkeit auf Anlagen bestimmter Hersteller oder Komponentengenerationen beschränkt.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen standardisiert eine Dokumentation von Eigenschaften von Geräten realisiert werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Dokumentieren zumindest einer Eigenschaft zumindest eines Geräts mittels einer elektronischen Recheneinrichtung. Es wird zumindest ein textbasierter Eigenschaftseintrag des Geräts mittels der elektronischen Recheneinrichtung empfangen. Es erfolgt das Anpassen des textbasierten Eigenschaftseintrags in ein standardisiertes Format mittels einer künstlichen Intelligenz der elektronischen Recheneinrichtung und das Speichern und Dokumentieren des textbasierten Eigenschaftseintrags im standardisierten Format mittels der elektronischen Recheneinrichtung.

Somit können insbesondere die textbasierten Eigenschaftseinträge entsprechend standardisiert werden und dokumentiert werden. Als Eigenschaft können insbesondere Ereignisse des Geräts oder textuelle Geräte-/ Produktspezifikationen angesehen werden. Somit können sich beispielsweise Vergleiche von Eigenschaften/Ereignissen bei ähnlichen Geräten, beispielsweise unterschiedlicher Hersteller oder unterschiedliche Generationen, entsprechend herstellen lassen und somit beispielsweise einem maschinellen Lernmodell zur weiteren Verwendung zur Verfügung gestellt werden.

Insbesondere im Zusammenhang mit der Zustandsüberwachung und der vorrausschauenden Wartung ist bei der Erfindung vorgesehen, dass die Daten aus verschiedenen vorhandenen Quellen auf eine einheitliche Weise maschinenlesbar gemacht werden.

Die vorgeschlagene Lösung ermöglicht eine effiziente Datentransformation mit einer hohen Flexibilität. Dies ermöglicht die Nutzung großer, bereits vorhandener Datenquellen, die aufgrund von Format, Sprache, syntaktischen Inkonsistenzen oder nicht maschinenlesbaren Formaten bisher nicht verarbeitet werden können. Weiterhin ermöglicht die hier vorgeschlagene Lösung die Herstellerunabhängigkeit von entsprechenden ML-Tool (Maschinen learning - maschinelles lernen), die zum Beispiel auf Log-Meldungen von vergleichbaren Anlagen verschiedener Hersteller entweder als Eingangsvariablen (Observabels) oder als Label-Informationen angewiesen sind.

Gemäß einer vorteilhaften Ausgestaltungsform ist die künstliche Intelligenz als Textgenerationsmodell bereitgestellt. Mit anderen Worten kann der dokumentierte Eigenschaftseintrag durch das Textgenerationsmodell entsprechend erkannt und gelesen werden und dann in ein standardisiertes Format, insbesondere Textformat, umgewandelt werden. Somit ist es ermöglicht, dass mittels des Textgenerationsmodells zuverlässig eine Dokumentation der Eigenschaft realisiert werden kann.

Weiterhin vorteilhaft ist, wenn das Textgenerationsmodell als großes Sprachmodell bereitgestellt wird. Bei dem großen Sprachmodell handelt es sich insbesondere um das sogenannte Large Language Modell (LLM). Auf Basis des großen Sprachmodells, insbesondere auf Basis der künstlichen Intelligenz des Sprachmodells, kann zuverlässig der textbasierte Eigenschaftseintrag in das standardisierte Format umgewandelt werden. Dabei können auch unterschiedliche Sprachen der Dokumentation zuverlässig berücksichtigt werden.

Ferner hat es sich als vorteilhaft erwiesen, wenn auf Basis der dokumentierten, standardisierten und textbasierten Eigenschaft ein aktueller Zustand des Geräts bestimmt wird. Mit anderen Worten kann vorgesehen sein, dass die textbasierte Eigenschaft entsprechend erfasst wird und dann standardisiert wird und auf Basis des standardisierten Formats beispielsweise mit bereits bekannten Ereignissen verglichen wird. Somit kann auf den aktuellen Zustand, beispielsweise auf den Fehlerzustand, entsprechend geschlossen werden.

Insbesondere wird somit die bereits angelernte künstliche Intelligenz bereitgestellt um einen Zustand des Geräts ermitteln zu können. Dabei kann die gleiche elektronische Recheneinrichtung genutzt werden, wie zum Anlernen der künstlichen Intelligenz. Alternativ oder ergänzend kann auch die angelernte künstliche Intelligenz auf eine weitere elektronische Recheneinrichtung, beispielsweise einer Produktionsanlage, transferiert werden und dort genutzt werden, um die Zustände zu erfassen.

In einer weiteren vorteilhaften Ausgestaltungsform wird gesehen, dass auf Basis der dokumentierten, standardisierten und textbasierten Eigenschaft ein zukünftiger Zustand des Geräts bestimmt wird. Insbesondere können beispielsweise entsprechende Fehlermeldungen von Einzelanlagen des Geräts beziehungsweise von Parametern des Geräts entsprechend dahingehend ausgewertet werden, dass zukünftig ein entsprechendes Ereignis beziehungsweise Zustand des Geräts eintreten wird. Somit kann beispielsweise verhindert werden, dass das Gerät in einen entsprechenden Fehlerzustand geht, wodurch insbesondere Produktionsprozesse verbessert werden können.

In einer weiteren vorteilhaften Ausgestaltungsform ist vorgesehen, dass mittels der dokumentierten, standardisierten und textbasierten Eigenschaft ein maschineller Lernalgorithmus für den Betrieb des Geräts angelernt wird. Mit anderen Worten werden die standardisierten und textbasierten Eigenschaften genutzt, um Trainingsdaten für einen maschinellen Lernalgorithmus (ML-Algorithmus) zu erzeugen und bereitzustellen. Der ML-Algorithmus kann dann für den Betrieb des Geräts genutzt werden, um beispielsweise Zustände des Geräts zuverlässig zu bestimmen beziehungsweise vorherzusagen.

In einer weiteren vorteilhaften Ausgestaltungsform ist vorgesehen, dass manuell erzeugte textbasierte Eigenschaftseinträge empfangen und angepasst werden. Beispielsweise können von entsprechenden Nutzern manuell erzeugte textbasierte Eigenschaftseinträge insbesondere in unterschiedlichen Sprachen, beispielsweise auf Deutsch, Englisch, Französisch oder weiteren Sprachen, erzeugt werden. Auf Basis der künstlichen Intelligenz können die nun textbasierten Eigenschaftseinträge von der elektronischen Recheneinrichtung empfangen werden und dann in das standardisierte Format umgewandelt werden. Somit sind manuell erzeugte textbasierte Eigenschaftseinträge standardisierbar. Hierzu können beispielsweiser auch handschriftlich erzeugte Dokumentation über OCR-Programme eingelesen und digitalisiert/maschinenlesbar werden und somit zur Dokumentation genutzt werden.

Ebenfalls vorteilhaft ist, wenn automatisiert erzeugte textbasierte Eigenschaftseinträge empfangen und angepasst werden. Beispielsweise können von dem Gerät selbst entsprechende Fehlercodes beziehungsweise Fehlernachrichten textbasiert als Eigenschaftseinträge erzeugt werden. Diese können nun von der elektronischen Recheneinrichtung empfangen werden und dann in ein standardisiertes Format umgewandelt werden. Somit können beispielsweise Geräte unterschiedlicher Hersteller beziehungsweise unterschiedlicher Generationen und deren Eigenschaftseinträge miteinander verglichen werden.

Weiterhin vorteilhaft ist, wenn automatisiert erzeugte textbasierte Eigenschaftseinträge von unterschiedlichen Geräten empfangen und angepasst werden. Dabei können die Geräte im Wesentlichen ähnlich jedoch beispielsweise von unterschiedlichen Generationen oder von unterschiedlichen Herstellern ausgebildet sein. Die Eigenschaftseinträge können dazu genutzt werden, um entsprechende Lernalgorithmen anzulernen, und zukünftig einen Status der unterschiedlichen Geräte zuverlässig vorherzusagen beziehungsweise zu bestimmen.

Weiterhin vorteilhaft ist, wenn zumindest ein Fehler des Geräts als textbasierte Eigenschaftseintrag empfangen und angepasst wird. Beispielsweise können entsprechende Fehlernachrichten beziehungsweise Fehlercodes des Geräts in textbasierter Form empfangen und dann standardisiert werden. Dadurch können Fehler entsprechend erkannt beziehungsweise zukünftig verhindert werden.

Eine weitere vorteilhafte Ausgestaltungsform sieht vor, dass in Abhängigkeit von einer Schlagwortsuche im textbasierten Eigenschaftseintrag die Standardisierung durchgeführt wird. Beispielsweise kann der textbasierte Eigenschaftseintrag entsprechend Schlagwörter wie Uhrzeit, Datum, Art des Ereignisses und dergleichen aufweisen und eine Schlagwortsuche entsprechend auf Basis dieser Eigenschaftseinträge die standardisierte Formierung des textbasierten Eigenschaftseintrags durchführen. Somit ist es möglich, dass auf einfache Art und Weise die Dokumentation realisiert werden kann.

Ebenfalls vorteilhaft ist, wenn eine Art des Geräts beim Anpassen des textbasierten Eigenschaftseintrags berücksichtigt wird. Insbesondere können somit ähnliche Geräte, insbesondere in der Art und Weise ähnliche Geräte, entsprechend miteinander verglichen werden beziehungsweise Eigenschaftseinträge miteinander verglichen werden. Somit ist es ermöglicht, dass zuverlässig eine Dokumentation realisiert werden kann.

Bei dem vorgestellten Verfahren handelt es sich insbesondere um ein computer-implementiertes Verfahren. Daher betrifft ein weiterer Aspekt der Erfindung ein Computerprogrammprodukt mit Programmcodemitteln, welche eine elektronische Recheneinrichtung zu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit zumindest einem Computerprogrammprodukt nach dem vorhergehenden Aspekt.

Ein nochmals weiterer Aspekt der Erfindung betrifft eine elektronische Recheneinrichtung zum Dokumentieren zumindest einer Eigenschaft zumindest eines Geräts, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhaftes Ausgestaltungsform des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle (LUT) durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "applicationspecific integrated circuit"), eines oder mehrere feldprogrammierbare Gate-Arrays, FPGA, und/oder eines oder mehrere EinchipsystemeDie Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "readonly memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

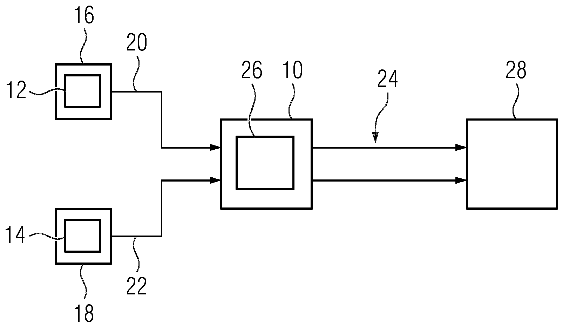

Dabei zeigt die einzige Figur ein schematisches Blockschaltbild gemäß einer Ausführungsform einer elektronischen Recheneinrichtung.

In der Figur sind gleiche oder funktionsgleiche Elemente mit den gleichen Bezugszeichen versehen.

Die FIG zeigt ein schematisches Blockschaltbild gemäß einer Ausführungsform einer elektronischen Recheneinrichtung 10. Die elektronische Recheneinrichtung 10 ist zum Dokumentieren zumindest einer Eigenschaft 12, 14 zumindest eines Geräts 16,18 ausgebildet. Als Eigenschaft 12 können hierbei insbesondere Ereignisse des Geräts 14, 16 oder textuelle Geräte- / Produktspezifikationen angesehen werden.

Im vorliegenden Ausführungsbeispiel ist insbesondere ein erstes Gerät 16 gezeigt, welches eine erste Eigenschaft 12 aufweist. Ferner ist ein zweites Gerät 18 gezeigt, welches eine zweite Eigenschaft 14 aufweist.

Gemäß einer Ausführungsform ist vorgesehen, dass ein textbasierter Eigenschaftseintrag 20, 22 des Geräts 16, 18 mittels der elektronischen Recheneinrichtung 10 empfangen wird. Es erfolgt das Anpassen des textbasierten Eigenschaftseintrags 20, 22 in ein standardisiertes Format 24 mittels einer künstlichen Intelligenz 26 der elektronischen Recheneinrichtung 10 und das Speichern und Dokumentieren des textbasierten Eigenschaftseintrags 20, 22 im standardisierten Format 24 mittels der elektronischen Recheneinrichtung 10.

Dabei kann insbesondere vorgesehen sein, dass die künstliche Intelligenz 26 als Textgenerationsmodell bereitgestellt wird. Insbesondere wird dabei das Textgenerationsmodell als großes Sprachmodell (Large Language Model - LLM) bereitgestellt.

Weiterhin kann vorgesehen sein, dass auf Basis der dokumentierten, standardisierten und textbasierten Eigenschaft ein zukünftiger Zustand des Geräts 16, 18 bestimmt wird. Ferner kann auch ein aktueller Zustand des Geräts 16, 18 bestimmt werden. Insbesondere wird somit die bereits angelernte künstliche Intelligenz 26 bereitgestellt um einen Zustand des Geräts 16, 18 ermitteln zu können. Dabei kann die gleiche elektronische Recheneinrichtung 10 genutzt werden, wie zum Anlernen der künstlichen Intelligenz 26. Alternativ oder ergänzend kann auch die angelernte künstliche Intelligenz 26 auf eine weitere elektronische Recheneinrichtung, beispielsweise einer Produktionsanlage, transferiert werden und dort genutzt werden, um die Zustände der Produktionsanlage zu erfassen.

Weiterhin kann vorgesehen sein, dass mittels der dokumentierten, standardisierten und textbasierten Eigenschaft ein maschineller Lernalgorithmus 28 für den Betrieb des Geräts 16, 18 angelernt wird.

Dabei kann weiterhin vorgesehen sein, dass manuell erzeugte textbasierte Eigenschaftseinträge empfangen und angepasst werden. Ferner können auch automatisiert erzeugte textbasierte Ereigniseinträge 20, 22 empfangen und angepasst werden.

Weiterhin kann vorgesehen sein, dass automatisiert erzeugte textbasierte Eigenschaftseinträge 20, 22 von unterschiedlichen Geräten 16, 18 empfangen und angepasst werden.

Des Weiteren kann vorgesehen sein, dass Fehler des Geräts 16, 18 als textbasierter Eigenschaftseintrag 20, 22 empfangen und angepasst werden.

Weiterhin kann vorgesehen sein, dass in Abhängigkeit von einer Schlagwortsuche im textbasierten Eigenschaftseintrag 20, 22 die Standardisierung durchgeführt wird. Ebenfalls kann eine Art des Geräts 16, 18 beim Anpassen des textbasierten Eigenschaftseintrags 20, 22 berücksichtigt werden.

Insbesondere zeigt somit die Figur, dass im Falle der Zustandsüberwachung und der vorrausschauenden Wartung entsprechende Daten aus verschiedenen vorhandenen Quellen auf eine einheitliche Weise maschinenlesbar gemacht werden können.

Einträge aus der Fehler- und Wartungsdokumentation oder Asset-Log-Informationen werden mit Hilfe der künstlichen Intelligenz 26, insbesondere mittels eines Large Language Modells (LLM), in eine definierbare, harmonisierte, strukturierte Form gebracht.

Dabei können beispielsweise die Eigenschaftseinträge 20, 22 und Fehler von vergleichbaren Geräten 16, 18 manuell von verschiedenen Personen oder automatisch dokumentiert werden, was zu formalen Inkonsistenzen innerhalb oder zwischen einzelnen Ereignis- und Fehlerdokumentationssystem führt. Weiterhin werden auch automatisierte Protokollsysteme von Ereignissen und Fehlern ähnlicher Anlagen von verschiedenen Herstellern herstellerspezifisch dokumentiert, was zu formalen und syntaktischen Inkonsistenzen zwischen herstellerspezifischen Protokollen führt.

In beiden Szenarien werden die Dokumentations-oder Protokolldateien mit entsprechender Eingabeaufforderung an ein großes Sprachmodell weitergeleitet, dass die Harmonisierung und Strukturierung der Eingabedaten verlangt. Das Large Language Modell könnte auch mit zusätzlichen Informationen aus der Wissensbasis der Domäne angereichert werden, indem die Ausgabe einer Schicht zu einem LLM-Prompt hinzugefügt wird oder es könnte ein fein abgestimmtes LLM sein. Die Ausgabe ist eine strukturierte Repräsentation der Eingabedaten nach einheitlichen Formalien und syntaktischen Anforderungen.

Beispielhaft kann ein Wartungsbuch eine folgende Meldung enthalten:
"am 04.05.2021 wurde das Kardangelenk aufgrund einer Blockierung des Getriebesystems am 03.05.2021 ausgetauscht."

Die Einträge im Wartungslogbuch werden dann mit dem Large Language Modell eingespeist, zusammen mit einer Eingabeaufforderung, die den Befehl zur Extraktion für Informationen für bestimmte Schlüsselwörter, zum Beispiel Ereignisdaten, Ereignistyp, betroffene Komponenten oder dergleichen, und Regeln für das Ausgabeformat enthält. Das Large Language Modell identifiziert die Informationen, die mit den gegebenen Schlüsselwörtern verbunden sind, und stellt sie auf eine einheitliche, strukturierte Weise dar. Zum Beispiel:

```
 {
 "date": "2021-05-03"
 "event": "blockage"
 "part-type": "transmission"
 "part": cardan joint
 "event-type": "failure"
 "criticality": "high"
 "documentator": "N/A"
 "actions": "none"
 "resolved": "no"
 }
 {
 "date": "2021-05-04"
 "event": "maintenance"
 "part-type": "transmission"
 "part": "cardan joint"
 "event-type": "maintenance"
 "criticality": "N/A"
 "documentator": "N/A"
 "actions": "replacement"
 "resolved": "yes"
 }
```

Das gleiche Beispiel lässt sich für die Harmonisierung und Strukturierung automatischer Protokollmeldungen von Anlagen verschiedener Hersteller oder Komponentengenerationen anführen.

Der harmonische, strukturierte Datensatz wird dann in der Entwicklungsphase zu Datenexploration und als Datensatz von Labels und/oder observabels für KI-basierte ML-Tools zum Training verwendet.

In der Inferenzphase der entwickelten ML-Tools ist die beschriebene Datenstrukturierung und - Harmonisierung ein integraler Bestandteil der Vorverarbeitung, wenn die Daten aus der Ereignisdokumentation und den automatischen Protokollen als Eingabedaten (observabel) dieser Tools verwendet werden.

## Patentansprüche

1. Verfahren zum Dokumentieren zumindest einer Eigenschaft (12, 14) zumindest eines Geräts (16, 18) mittels einer elektronischen Recheneinrichtung (10), mit den Schritten:
- Empfangen von zumindest einem textbasierten Eigenschaftseintrag (20, 22) des Geräts (16, 18) mittels der elektronischen Recheneinrichtung (10);
- Anpassen des textbasierten Eigenschaftseintrags (20, 22) in ein standardisiertes Format (24) mittels einer künstlichen Intelligenz (26) der elektronischen Recheneinrichtung (10); und
- Speichern und Dokumentieren des textbasierten Eigenschaftseintrags (20, 22) im standardisierten Format (24) mittels der elektronischen Recheneinrichtung (10).

2. Verfahren nach Anspruch 1, **dadurch gekennzeichnet, dass**
die künstliche Intelligenz (26) als Textgenerationsmodell bereitgestellt wird.

3. Verfahren nach Anspruch 2, **dadurch gekennzeichnet, dass**
das Textgenerationsmodell als großes Sprachmodell bereitgestellt wird.

4. Verfahren nach einem der vorhergehenden Ansprüche, **dadurch gekennzeichnet, dass** auf Basis der dokumentierten, standardisierten und textbasierten Eigenschaft ein aktueller Zustand des Geräts (16, 18) bestimmt wird.

5. Verfahren nach einem der vorhergehenden Ansprüche, **dadurch gekennzeichnet, dass** auf Basis der dokumentierten, standardisierten und textbasierten Eigenschaft ein zukünftiger Zustand des Geräts (16, 18) bestimmt wird.

6. Verfahren nach einem der vorhergehenden Ansprüche, **dadurch gekennzeichnet, dass** mittels der dokumentierten, standardisierten und textbasierten Eigenschaft ein maschineller Lernalgorithmus für den Betrieb des Geräts (16, 18) angelernt wird.

7. Verfahren nach einem der vorhergehenden Ansprüche, **dadurch gekennzeichnet, dass** manuell erzeugte textbasierte Eigenschaftseinträge empfangen und angepasst werden.

8. Verfahren nach einem der vorhergehenden Ansprüche, **dadurch gekennzeichnet, dass** automatisiert erzeugte textbasierte Eigenschaftseinträge empfangen und angepasst werden.

9. Verfahren nach einem der vorhergehenden Ansprüche, **dadurch gekennzeichnet, dass** automatisiert erzeugte textbasierte Eigenschaftseinträge von unterschiedlichen Geräten (16, 18) empfangen und angepasst werden.

10. Verfahren nach einem der vorhergehenden Ansprüche, **dadurch gekennzeichnet, dass** Fehler des Geräts (16, 18) als textbasierter Eigenschaftseintrag empfangen und angepasst werden.

11. Verfahren nach einem der vorhergehenden Ansprüche, **dadurch gekennzeichnet, dass** in Abhängigkeit von einer Schlagwortsuche im textbasierten Eigenschaftseintrag (20, 22) die Standardisierung durchgeführt wird.

12. Verfahren nach einem der vorhergehenden Ansprüche, **dadurch gekennzeichnet, dass** eine Art des Geräts (16, 18) beim Anpassen des textbasierten Eigenschaftseintrags (20 22) berücksichtigt wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (10) zum Dokumentieren zumindest einer Eigenschaft (12, 14) zumindest eines Geräts (16, 18), wobei die elektronische Recheneinrichtung (10) zum Durchführen eines Verfahrens nach einem der Ansprüche 1 bis 12 ausgebildet ist.
